# EUROPÄISCHE PATENTANMELDUNG

(11) **EP 4 007 053 A2**
(43) Veröffentlichungstag der Anmeldung: **01.06.2022**
(21) Anmeldenummer: 21209504.6
(22) Anmeldetag: 22.11.2021
(51) Int. Cl.: H01M 50/209

(54) **FÜGEVORRICHTUNG UND VERFAHREN ZUR BEREITSTELLUNG EINES BATTERIEMODULS**

(30) Priorität: 27.11.2020 DE 102020131484
(71) Anmelder: Maschinenbau Kitz GmbH, 53844 Troisdorf (DE)
(72) Erfinder: Forster, Rainer, 53859 Niederkassel Mondorf (DE)
(74) Vertreter: Wagner Albiger & Partner Patentanwälte mbB

(57) **Zusammenfassung**

Fügevorrichtung (2) zur Bereitstellung eines eine Mehrzahl von Batteriezellen (4) aufweisenden Batteriemoduls (5), wobei die Fügevorrichtung (2) folgendes umfasst:
- eine Zuführeinrichtung (6) zur Zuführung von Batteriezellen (4) zu einem Fügebereich (20);
- eine neben der Zuführeinrichtung (6) positionierbare Aufnahmevorrichtung (8) für zumindest einen Rahmen (9) zur Aufnahme des Batteriemoduls (5), wobei der Rahmen (9) zumindest eine Bodenfläche (10) sowie eine erste offene Stirnseite (12) und eine dieser gegenüberliegende zweite offene Stirnseite (13) aufweist und wobei der Rahmen (9) auf der Aufnahmevorrichtung (8) derart ausrichtbar ist, dass die zweite offene Stirnseite (13) der Zuführeinrichtung (6) zugewandt ist,
- eine an der ersten offenen Stirnseite (12) des Rahmens (9) anordenbare erste Anlagefläche,
- eine durch zumindest einen Schieber (14) ausgebildete zweite Anlagefläche, wobei der zumindest eine Schieber (14) in Richtung der ersten Anlagefläche verschiebbar ist, um Batteriezellen (4) aus der Zuführeinrichtung (6) durch die zweite offene Stirnseite (13) in Richtung der ersten Anlagefläche in den Rahmen (9) zu schieben.

## Beschreibung

Die vorliegende Erfindung betrifft eine Fügevorrichtung zur Bereitstellung eines eine Mehrzahl von Batteriezellen aufweisenden Batteriemoduls, eine Anlage mit einer Fügevorrichtung sowie ein Verfahren zur Bereitstellung eines Batteriemoduls. Insbesondere betrifft die Erfindung die Bereitstellung von Batteriemodulen für die Traktionsbatterie von Elektro- oder Hybridfahrzeugen, wobei insbesondere prismatische und sogenannte Pouch-Zellen zum Einsatz kommen.

Bei der Fertigung derartiger Batteriemodule wird eine Mehrzahl von einzelnen Batteriezellen zunächst zu einem Stapel miteinander verbunden. Teilweise ist es dabei üblich, die Batteriezellen vertikal aufeinander zu stapeln. Dies hat jedoch den Nachteil, dass insbesondere die unteren Batteriezellen hohen mechanischen Belastungen ausgesetzt sind.

Aus der DE 20 2017 104 111 U1 ist es bekannt, Batteriezellen und Zubehörteile für ein Batteriemodul in einem Transportcontainer zusammenzustellen und zu einer Fügevorrichtung zu transportieren, bei der die Batteriezellen zu einem horizontalen Stapel zusammengeschoben werden. Dazu ist ein Rahmen mit einem beweglichen Körper vorgesehen, wobei die Batteriezellen und gegebenenfalls Zubehörteile durch einen Industrieroboter in den Rahmen gesetzt und anschließend durch den beweglichen Körper zu einem Batteriemodul zusammengeschoben werden. Bei der weiteren Bearbeitung des auf diese Weise geformten Batteriemoduls, beispielsweise bei der Kontaktierung der einzelnen Zellen, verbleibt das Batteriemodul unter Spannung in dem Rahmen.

Das Verfahren ermöglicht das für die einzelnen Batteriezellen schonende horizontale Stapeln der Batteriezellen. Es erfordert jedoch verhältnismäßig aufwendige Anlagen. Zudem können Arbeitsschritte größtenteils nur getaktet, nicht jedoch im Durchlauf durchgeführt werden.

Es ist eine Aufgabe der vorliegenden Erfindung, eine besonders einfach aufgebaute Fügevorrichtung und ein besonders effizientes Verfahren zur Bereitstellung eines eine Mehrzahl von Batteriezellen aufweisenden Batteriemoduls anzugeben.

Diese Aufgabe wird gelöst durch den Gegenstand der unabhängigen Patentansprüche. Weitere Ausführungsformen sind Gegenstand der Unteransprüche.

Gemäß einem Aspekt der Erfindung wird eine Fügevorrichtung zur Bereitstellung eines eine Mehrzahl von Batteriezellen aufweisenden Batteriemoduls angegeben, wobei die Fügevorrichtung eine Zuführeinrichtung zur Zuführung von Batteriezellen zu einem Fügebereich aufweist sowie eine neben der Zuführeinrichtung positionierbare Aufnahmevorrichtung für zumindest einen Rahmen zur Aufnahme des Batteriemoduls. Der Rahmen weist zumindest eine Bodenfläche sowie eine erste offene Stirnseite und eine dieser gegenüberliegende zweite offene Stirnseite auf. Der Rahmen kann darüber hinaus geschlossene oder teilweise geschlossene Seitenwände aufweisen.

Der Rahmen ist auf der Aufnahmevorrichtung derart ausrichtbar, dass die zweite offene Stirnseite der Zuführeinrichtung zugewandt ist.

Ferner weist die Fügevorrichtung eine an der ersten offenen Stirnseite des Rahmens anordenbare erste Anlagefläche auf sowie eine durch zumindest einen Schieber ausgebildete zweite Anlagefläche, wobei der zumindest eine Schieber in Richtung der ersten Anlagefläche verschiebbar ist, um Batteriezellen aus der Zuführeinrichtung durch die zweite offene Stirnseite in Richtung der ersten Anlagefläche in den Rahmen zu schieben.

Die Zuführeinrichtung hat den Vorteil, dass sie die Bildung eines Batteriemoduls aus einzelnen Batteriezellen durch eine einfache Verschiebung der Batteriezellen nacheinander in den Rahmen ermöglicht. Unter einer Verschiebung wird dabei hier und im folgenden eine Translationsbewegung über einen Untergrund verstanden, die ein Aufnehmen und Absetzen der Batteriezelle nicht erfordert.

Da für das Einsetzen der Batteriezellen in den Rahmen lediglich eine Verschiebung der Batteriezellen erforderlich ist, kann die Fügevorrichtung weniger komplex aufgebaut und dadurch sowohl weniger fehleranfällig und auch weniger kostenintensiv ausgeführt sein.

Gemäß einer Ausführungsform ist der zumindest eine Schieber in einer horizontalen Richtung senkrecht zu einer Zuführrichtung der Zuführeinrichtung beweglich, um Batteriezellen aus der Zuführeinrichtung in den Rahmen zu schieben.

Bei dieser Ausführungsform werden die Batteriezellen quer zur Richtung ihrer Anlieferung an die Fügevorrichtung in den Rahmen verschoben. Dies ermöglicht verhältnismäßig kurze Taktzeiten und eine große Flexibilität in der Produktion.

Gemäß einer Ausführungsform weist der zumindest eine Schieber eine Einrichtung zur Kraft-Weg-Überwachung auf. Diese Einrichtung kann insbesondere dadurch verwirklicht sein, dass der zumindest eine Schieber mittels eines Servoantriebs um einen Nennweg verschiebbar ausgebildet ist, um die Batteriezellen in den Rahmen zu schieben, wobei die Fügevorrichtung Mittel zur Überwachung der für die Verschiebung benötigten Kraft umfasst. Dies kann insbesondere über den Antriebsstrom erfolgen.

Gemäß dieser Ausführungsform wird die Verschiebung der Batteriezellen und der Andruck an benachbarte Batteriezellen des Batteriemoduls kraft- und weggesteuert ausgeführt. Dies ermöglicht die Erkennung von Abweichungen einer Sollkraft beim Fahren eines Nennweges. Aus derartigen Abweichungen kann insbesondere auf einen fehlerhaften Auftrag von Klebstoff auf die Batteriezellen geschlossen werden.

Üblicherweise werden die einzelnen Batteriezellen eines Batteriemoduls mittels eines Klebstoffes, beispielsweise in Form von Klebestreifen, Sprühkleber oder flüssig aufgebrachtem Kleber, miteinander verbunden. Der Klebstoffauftrag erfolgt dabei entweder nur auf eine Seitenfläche der Batteriezellen oder auf beide Seitenflächen, die mit benachbarten Zellen des Moduls in Kontakt kommen. Ist der Klebstoffauftrag fehlerhaft, weil zu viel oder zu wenig Klebstoff aufgebracht wurde, werden die Stabilität und Funktionsfähigkeit des gebildeten Batteriemoduls negativ beeinflusst. Es ist somit vorteilhaft, den korrekten Klebstoffauftrag zu überwachen. Dies kann besonders einfach über eine Kraft-Weg-Überwachung des zumindest einen Schiebers der Fügevorrichtung erfolgen.

Gemäß einer Ausführungsform ist die zweite Anlagefläche durch zumindest zwei in einer Zuführrichtung der Zuführeinrichtung nebeneinander angeordnete Schieber ausgebildet. Es können auch mehr als zwei nebeneinander angeordnete Schieber vorgesehen sein.

Die Anzahl der nebeneinander angeordneten Schieber kann insbesondere davon abhängig gewählt werden, wie breit das herzustellende Batteriemodul ist. Weist das herzustellende Batteriemodul nicht nur einen, sondern beispielsweise zwei oder drei nebeneinander angeordnete Stapel von Batteriezellen auf, so kann eine besonders effiziente Herstellung des Batteriemoduls dadurch erreicht werden, dass nebeneinander angeordnete Batteriezellen gleichzeitig von der Zuführeinrichtung in den Rahmen verschoben werden. Dies ermöglicht eine erhebliche Erhöhung der Taktzeiten.

Zudem hat diese Ausführungsform den Vorteil, dass auf derselben Fügevorrichtung Batteriemodule unterschiedlicher Breite herstellbar sind. Abhängig von der Anzahl nebeneinander anzuordnender Batteriezellen werden ein einzelner Schieber, zwei Schieber oder mehr Schieber eingesetzt, um die Batteriezellen in den bereitgestellten Rahmen zu verschieben. Dazu ist keine Modifikation der Fügevorrichtung erforderlich. Lediglich die Bereitstellung des Rahmens kann gegebenenfalls angepasst an die Größe des herzustellenden Batteriemoduls erfolgen. Alle weiteren Anpassungen erfolgen lediglich softwareseitig. Damit ist die Fügevorrichtung besonders flexibel.

Gemäß einer Ausführungsform ist demnach die Anzahl der Schieber, die Taktzahl des zumindest einen Schiebers sowie die Zuführgeschwindigkeit der Zuführeinrichtung in Abhängigkeit von der Anzahl und Breite der in einer Zuführrichtung der Zuführeinrichtung nebeneinander im Rahmen anzuordnenden Batteriezellen wählbar.

Die Fügevorrichtung und ihre Arbeitsweise ist demnach auch unabhängig von der Breite der Batteriezellen. Werden unterschiedliche Batteriemodule mit der Fügevorrichtung gebildet, die aus unterschiedlich breiten Batteriezellen zusammengesetzt sind, so kann der Fügevorgang über die Taktzahl des zumindest einen Schiebers sowie die Zuführgeschwindigkeit der Zuführeinrichtung auf die Breite der jeweils bearbeiteten Batteriezellen angepasst werden.

Gemäß einer Ausführungsform ist die erste Anlagefläche ebenfalls als Schieber ausgebildet und innerhalb des Rahmens in Richtung der zweiten Anlageflächen verschiebbar. Das hat den Vorteil, dass die Anzahl der einen horizontalen Stapel bildenden Batteriezellen begrenzt werden und damit die Länge der herzustellenden Batterie flexibel eingestellt werden kann.

Mit der Fügevorrichtung ist es somit möglich, sowohl die Länge als auch die Breite des herzustellenden Moduls flexibel zu wählen. Mit einer einzigen Anlage können somit Batteriemodule unterschiedlicher Abmessungen hergestellt werden.

Gemäß einer Ausführungsform ist die Aufnahmevorrichtung für den zumindest einen Rahmen als Fördereinrichtung ausgebildet, deren Förderrichtung zumindest bereichsweise parallel zu einer Zuführrichtung der Zuführeinrichtung verläuft. Diese Ausführungsform hat den Vorteil, dass die Fügevorrichtung besonders effizient und zeitsparend arbeitet.

Gemäß einem Aspekt der Erfindung wird eine Anlage mit der beschriebenen Fügevorrichtung bereitgestellt, die ferner eine Vorbereitungseinrichtung zur Vorbereitung der Batteriezellen zur Bildung des Batteriemoduls aufweist. Die Vorbereitungseinrichtung weist eine Einrichtung zum Aufbringen eines Klebstoffs auf zumindest eine Seitenfläche der Batteriezellen auf und ist entlang der Zuführeinrichtung angeordnet.

Insbesondere kann die Vorbereitungseinrichtung auch eine Reinigungseinrichtung umfassen, die die Batteriezellen in Vorbereitung zur Stapelung im Durchlauf reinigt und gegebenenfalls prüft, wobei der Klebstoff anschließend auf eine oder mehrere Seitenflächen der Batteriezellen aufgebracht wird.

Gemäß einem weiteren Aspekt der Erfindung wird ein Verfahren zur Bereitstellung eines eine Mehrzahl von Batteriezellen aufweisenden Batteriemoduls angegeben. Das Verfahren umfasst das Bereitstellen einer Anzahl von Batteriezellen und das Zuführen der Batteriezellen zu einem das zu bildende Batteriemodul aufnehmenden Rahmen, wobei die Batteriezellen auf zumindest einer Seitenfläche mit einem Klebstoffauftrag versehen sind. Ferner umfasst das Verfahren das horizontale Verschieben der Batteriezellen in den Rahmen unter Anpressen der Batteriezellen an benachbarte Batteriezellen und unter Verbinden von Seitenflächen benachbarter Batteriezellen mittels des Klebstoffs, wobei die Batteriezellen insbesondere um einen Nennweg verschoben und die dazu aufgebrachte Kraft ermittelt wird, um einen fehlerhaften Klebstoffauftrag zu erkennen.

Ausführungsformen der Erfindungen werden im Folgenden anhand von Figuren näher beschrieben. Darin zeigen
- Figur 1: schematisch eine Anlage mit einer Fügevorrichtung zur Bereitstellung von eine Mehrzahl von Batteriezellen aufweisenden Batteriemodulen gemäß einer Ausführungsform der Erfindung in einer Draufsicht;
- Figur 2: schematisch die Anlage gemäß Figur 1 in einer Seitenansicht und
- Figur 3: schematisch die Anlage gemäß Figur 1 in einer perspektivischen Ansicht.

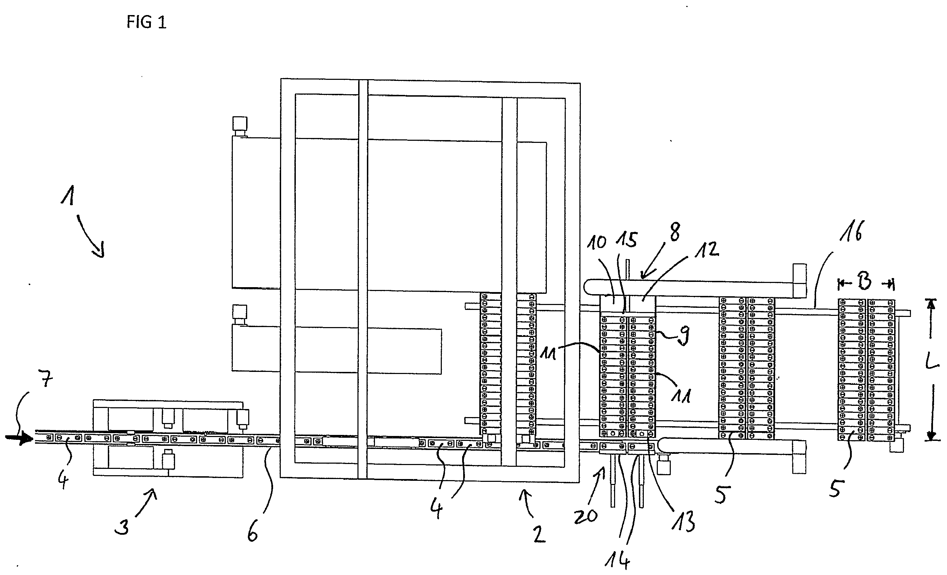

Figur 1 zeigt eine Anlage 1 zur Bereitstellung von aus einzelnen Batteriezellen 4 gebildeten Batteriemodulen 5. Die Anlage 1 umfasst eine Fügevorrichtung 2 mit einer Zuführeinrichtung 6 in Form eines Fördersystems, mittels der einzelne Batteriezellen 4 zu einem Fügebereich 20 gebracht werden, um dort zu Batteriemodulen 5 zusammengefügt zu werden.

Die Anlage 1 weist neben der Fügevorrichtung 2 auch eine dieser vorgeschaltete Vorbereitungseinrichtung 3 zur Vorbereitung der Batteriezellen 4 auf.

In dem Fügebereich 20 weist die Fügevorrichtung 2 zumindest eine neben der Zuführeinrichtung 6 positionierbare Aufnahmevorrichtung 8 für zumindest einen Rahmen 9 auf. Der Rahmen 9 dient zur Aufnahme der Batteriezellen 4 zur Bildung eines Batteriemoduls 5 und weist in der gezeigten Ausführungsform eine Bodenfläche 10, zwei einander gegenüberliegende Seitenwände 11 sowie eine offene erste Stirnseite 12 und eine offene zweite Stirnseite 13 auf. Der Rahmen 9 kann insbesondere ein Gehäuseteil des Batteriemoduls 5 bilden und dauerhaft am Batteriemodul 5 verbleiben. Alternativ kann das Batteriemodul 5 auch so konzipiert sein, dass es zu einem späteren Zeitpunkt im Herstellungsprozess aus dem Rahmen 9 entnommen wird.

Die Fügevorrichtung 2 weist im Fügebereich in der gezeigten Ausführungsform zwei in der durch den Pfeil 7 gekennzeichneten Zuführrichtung nebeneinander angeordnete Schieber 14 auf, die horizontal quer zur Zuführrichtung mittels eines Servoantriebs beweglich sind. Den Schiebern 14 an der ersten offenen Stirnseite 12 des Rahmens 9 gegenüberliegend ist ein weiterer Schieber 15 angeordnet, der sich in der gezeigten Ausführungsform über die gesamte Breite B des Rahmens 9 erstreckt und der ebenfalls in horizontaler Richtung quer zur Zuführrichtung beweglich und in einer gewünschten Position feststellbar ist. Statt des einzelnen Schiebers 15 können auch mehrere nebeneinander angeordnete, schmalere Schieber verwendet werden. Die Schieber 14 und 15 stellen eine erste und eine zweite Anlagefläche zur Anlage an Seitenflächen der Batteriezellen 4 bereit.

Die Aufnahmevorrichtung 8 bildet einen Teil einer Fördereinrichtung 16, auf der die Rahmen 9 im leeren Zustand und mit darin angeordneten Batteriezellen 4 in den Fügebereich 20 hinein und aus diesem heraus bewegbar sind. In der Aufnahmevorrichtung 8 ist im Fügebereich 20 ein Rahmen 9 derart positionierbar, dass seine zweite offene Stirnseite 13 der Zuführeinrichtung 6 zugewandt ist.

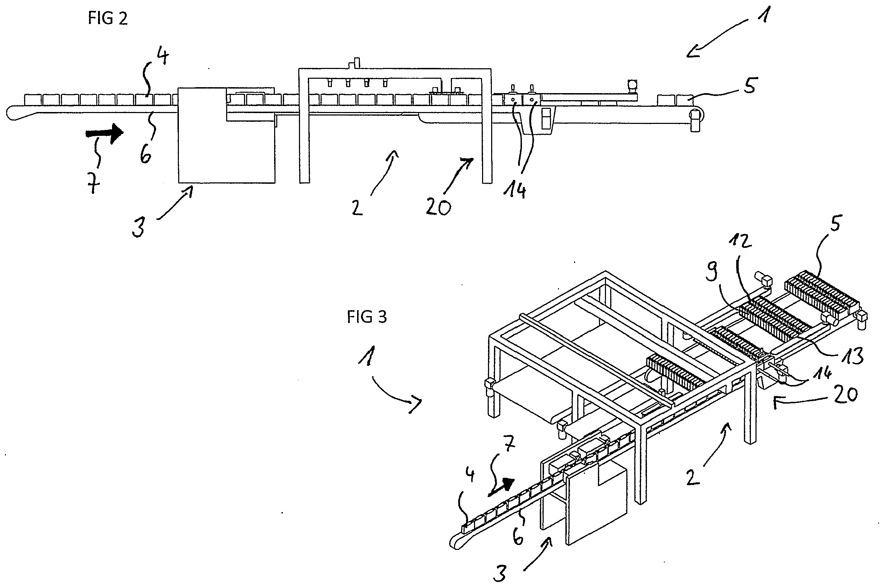

Die Figuren 2 und 3 zeigen die Anlage 1 gemäß Figur 1 in einer Seitenansicht bzw. in einer perspektivischen Ansicht.

Im Betrieb der Anlage 1 wird eine Mehrzahl von Batteriezellen 4 mittels der Zuführeinrichtung 6 zur Vorbereitungseinrichtung 3 gefördert und dort im Durchlauf gereinigt und mit einem Klebstoffauftrag auf zumindest einer Seitenfläche versehen. Anschließend werden die derart vorbereiteten Batteriezellen 4 in den Fügebereich 20 der Fügevorrichtung 2 transportiert. In dem Fügebereich 20 wird zudem ein Rahmen 9 zur Aufnahme der Batteriezellen 4 bereitgestellt.

Abhängig von der Breite B des herzustellenden Batteriemoduls 5 wird ein Rahmen 9 bereitgestellt und eine passende Anzahl von Schiebern 14 angesteuert, um Batteriezellen 4 in den Rahmen 9 zu verschieben. In der gezeigten Ausführungsform werden Batteriemodule 5 mit einer Breite B hergestellt, die zwei Batteriezellen 4 entspricht. Es werden daher beide Schieber 14 verwendet.

Zudem wird abhängig von der Länge L der herzustellenden Batteriemodule 5 der zumindest eine Schieber 15 in den Rahmen 9 gefahren und dort in der gewünschten Position fixiert.

Anschließend wird das Batteriemodul 5 zusammengesetzt, indem jeweils zwei nebeneinanderliegende Batteriezellen 4 von der Zuführeinrichtung 6 durch die Schieber 14 von der zweiten offenen Stirnseite 13 aus in den Rahmen 9 geschoben werden. Sind die ersten beiden Batteriezellen 4 in den Rahmen 9 verschoben worden, so fördert die Zuführeinrichtung 6 zwei weitere Batteriezellen 4 in den Fügebereich 20, und diese werden ebenfalls durch die Schieber 14 in den Rahmen 9 verschoben. Dabei werden die Batteriezellen 4 an die bereits vorher in den Rahmen 9 verschobenen Batteriezellen 4 angepresst. Die Anpresskraft wird mittels einer Kraft-Weg-Steuerung überwacht, um einen fehlerhaften Klebstoffauftrag erkennen zu können.

Ist der Fügevorgang des Batteriemoduls 5 abgeschlossen, so wird dieses aus dem Fügebereich 20 durch die Fördereinrichtung 16 heraustransportiert und weiterbearbeitet.

### Bezugszeichenliste

- 1: Anlage
- 2: Fügevorrichtung
- 3: Vorbereitungseinrichtung
- 4: Batteriezelle
- 5: Batteriemodul
- 6: Zuführeinrichtung
- 7: Pfeil
- 8: Aufnahmevorrichtung
- 9: Rahmen
- 10: Bodenfläche
- 11: Seitenwand
- 12: erste Stirnseite
- 13: zweite Stirnseite
- 14: Schieber
- 15: Schieber
- 16: Fördereinrichtung
- 20: Fügebereich

- B: Breite
- L: Länge

## Patentansprüche

1. Fügevorrichtung (2) zur Bereitstellung eines eine Mehrzahl von Batteriezellen (4) aufweisenden Batteriemoduls (5), wobei die Fügevorrichtung (2) folgendes umfasst:
- eine Zuführeinrichtung (6) zur Zuführung von Batteriezellen (4) zu einem Fügebereich (20);
- eine neben der Zuführeinrichtung (6) positionierbare Aufnahmevorrichtung (8) für zumindest einen Rahmen (9) zur Aufnahme des Batteriemoduls (5), wobei der Rahmen (9) zumindest eine Bodenfläche (10) sowie eine erste offene Stirnseite (12) und eine dieser gegenüberliegende zweite offene Stirnseite (13) aufweist und wobei der Rahmen (9) auf der Aufnahmevorrichtung (8) derart ausrichtbar ist, dass die zweite offene Stirnseite (13) der Zuführeinrichtung (6) zugewandt ist,
- eine an der ersten offenen Stirnseite (12) des Rahmens (9) anordenbare erste Anlagefläche,
- eine durch zumindest einen Schieber (14) ausgebildete zweite Anlagefläche, wobei der zumindest eine Schieber (14) in Richtung der ersten Anlagefläche verschiebbar ist, um Batteriezellen (4) aus der Zuführeinrichtung (6) durch die zweite offene Stirnseite (13) in Richtung der ersten Anlagefläche in den Rahmen (9) zu schieben.

2. Fügevorrichtung (2) nach Anspruch 1,
wobei der zumindest eine Schieber (14) in einer horizontalen Richtung senkrecht zu einer Zuführrichtung der Zuführeinrichtung (6) beweglich ist, um Batteriezellen (4) aus der Zuführeinrichtung (6) in den Rahmen (9) zu schieben.

3. Fügevorrichtung (2) nach Anspruch 1 oder 2,
wobei der zumindest eine Schieber (14) eine Einrichtung zur Kraft-Weg-Überwachung aufweist.

4. Fügevorrichtung (2) nach Anspruch 3,
wobei der zumindest eine Schieber (14) mittels eines Servoantriebs um einen Nennweg verschiebbar ausgebildet ist, wobei die Fügevorrichtung (2) Mittel zur Überwachung der für die Verschiebung benötigten Kraft umfasst.

5. Fügevorrichtung (2) nach einem der vorhergehenden Ansprüche,
wobei die zweite Anlagefläche durch zumindest zwei in einer Zuführrichtung der Zuführeinrichtung (6) nebeneinander angeordnete Schieber (14) ausgebildet ist.

6. Fügevorrichtung (2) nach einem der Ansprüche 1 bis 5,
wobei die Anzahl der Schieber (14), die Taktzahl des zumindest einen Schiebers (14) sowie die Zuführgeschwindigkeit der Zuführeinrichtung (6) in Abhängigkeit von der Anzahl und Breite B der in einer Zuführrichtung der Zuführeinrichtung (6) nebeneinander im Rahmen (9) anzuordnenden Batteriezellen (4) wählbar ist.

7. Fügevorrichtung (2) nach einem der vorhergehenden Ansprüche,
wobei die erste Anlagefläche ebenfalls als Schieber (15) ausgebildet und innerhalb des Rahmens (9) in Richtung der zweiten Anlagefläche verschiebbar ist.

8. Fügevorrichtung (2) nach einem der Ansprüche 1 bis 7,
wobei die Aufnahmevorrichtung (8) für den zumindest einen Rahmen (9) als Fördereinrichtung (16) ausgebildet ist, deren Förderrichtung zumindest bereichsweise parallel zu einer Zuführrichtung der Zuführeinrichtung (6) verläuft.

9. Anlage mit einer Fügevorrichtung (2) nach einem der Ansprüche 1 bis 8, die ferner eine Vorbereitungseinrichtung (3) zur Vorbereitung der Batteriezellen (4) zur Bildung des Batteriemoduls (5) aufweist, wobei die Vorbereitungseinrichtung (3) eine Einrichtung zum Aufbringen eines Klebstoffes auf zumindest eine Seitenfläche der Batteriezellen (4) aufweist und entlang der Zuführeinrichtung (6) angeordnet ist.

10. Verfahren zur Bereitstellung eines eine Mehrzahl von Batteriezellen (4) aufweisenden Batteriemoduls (5), wobei das Verfahren folgendes umfasst:
- Bereitstellen einer Anzahl von Batteriezellen (4) und Zuführen der Batteriezellen (4) zu einem das zu bildende Batteriemodul (5) aufnehmenden Rahmen (9) mit offenen Stirnseiten (12, 13), wobei die Batteriezellen (4) auf zumindest einer Seitenfläche mit einem Klebstoffauftrag versehen sind,
- horizontales Verschieben der Batteriezellen (4) in den Rahmen (9) unter Anpressen der Batteriezellen (4) an benachbarte Batteriezellen (4) und unter Verbinden von Seitenflächen benachbarter Batteriezellen (4) mittels des Klebstoffs.

11. Verfahren nach Anspruch 10,
wobei die Batteriezellen (4) um einen Nennweg verschoben und die dazu aufgebrachte Kraft ermittelt wird, um einen fehlerhaften Klebstoffauftrag zu erkennen.
